# EUROPEAN PATENT APPLICATION

(11) **EP 1 617 538 A1**
(43) Date of publication of application: **18.01.2006**
(21) Application number: 04724914.9
(22) Date of filing: 31.03.2004
(51) Int. Cl.: H02J 1/02, H04M 11/04

(54) **DEVICE FOR SUPPRESSING RADIATION OCCURRING DURING INFORMATION TRANSMISSION THROUGH POWER SUPPLY LINES**

(30) Priority: 31.03.2003 RU 2003109497
(71) Applicant: Obschestvo S Ogranichennoy Otvetstvennostju "Algoritm", St. Petersburg, 198013 (RU)
(72) Inventor: KASHKAROV, Aleksandr Germanovich, St.Petersburg, 190000 (RU)
(74) Representative: Musker, David Charles
(86) International application number: PCT/RU2004/000129
(87) International publication number: WO 2004/088814

(57) **Abstract**

The invention refers to devices intended for the reduction of the level of high-frequency emission and interference. It may find application in data transmission networks comprising transceivers integrated into a single network via the existing electric power communication lines. The device comprises at least three identical windings placed on a common magnetic conductor. The windings are made so that they could be coordinatedly connected in series to the grounding line, neutral, line and phased electric power transmission lines, respectively. The device may be placed in a housing equipped with a plug and at least one socket, with said windings being connected between the appropriate contacts of said plug and socket.

## Description

The invention claimed herein refers to devices intended for reducing the level of high-frequency emission and interference. The invention claimed herein may find application in data transmission networks consisting of transceivers Integrated into a single network by means of existing electric power transmission lines. The device is designed for the reduction of the level of emission from electric power transmission lines and level of noise induced in these lines in the course of information transmission in the entire spectrum of transmitted signal. The device can be built into the existing devices of electric power transmission, lines (e.g. into input automatic switches and protective devices for switching the power supply line off). It can be also combined with plugs, sockets, adapters and extension cords.

Currently local area networks (LAN) are finding more and more extensive use in the field of information science and video graphic communication for the purpose of transmission and distribution of data and other information among multiple users (terminals) located inside one and the same building (for example, among personal computers, laptop computers, "electronic secretaries", printers and other users located in one and the same building without any restrictions on the "mobility" of these devices), as well as for the purpose of communication between the above-named users (terminals) and remote terminals.

Wireless Local Area Network (WLAN) actively introduced at present don't allow to completely satisfy the demand in information transmission. To a considerable degree this is associated with the fact that the area of radio communication coverage and range of action of such WLANs is .notably restricted due to low power of users' transceivers. Therefore, very often remotely located groups of users are united into a single network by laying special connection cables. However, this results in addibonal expenses making the entire system more expensive.

In the recent years scientists have been actively developing high transmission. rate hybrid networks, in which existing electric power transmission lines are employed for the communication between WLAN transceivers or for the integration of remote WLANs into a single network (the so called, Power Une Communication - PLC). Several international standards (e.g. Reg TP NB 30 - International Electromechanical Commission (IEC), Comite Europeen de Normalisation. Electrotechnique (CENELEC)) impose very stringent requirements upon the functioning of such hybrid networks related both to the level of emission in the course of information transmission and to signal spectra used for information transmission.

At the same time, initially electric power transmission lines were not intended for the transmission of information signals, due to which fact galvanic, capacitive and inductive couplings exist between lines, and these couplings are responsible for the interpenetration of high-frequency signals. In the existing electric power transmission systems the grounding (or neutral grounding) line and the circuit of capacitive coupling of earth with the grounding of housings of different electric installations together with supply lines form ground loops that perform the function of emitting and receiving antennas. When a hybrid network is functioning; these ground loops consume a portion of a valid signal energy. This energy is predominantly converted into the emission (especially at resonance frequencies of said ground loops), and the level of this emission in the overwhelming majority of cases exceeds the threshold values specified in IEC and CENELEC standards. As a result of this, significant reduction in the level of valid signal at frequencies of increased emission from the above-named ground loops and increase in the level of interference (predominantly, at these frequecnies) due to the fact that these loops receive the emission from broadcasting stations is observed in the amplitude-frequency characteristic of the communication channel of a hybrid network.

A device is known which is designed to reduce the level of high-frequency emission in the course of information transmission by electric power transmission lines [1] due to phase linkage of high-frequency signals in a three-phase cable electric power line. The device includes a splitter with one input and three outputs, to which three phase-shifting devices controlled by a controller are connected. Phase-shifting devices are connected to the appropriate phase electric power transmission lines via the high-pass filters.

The known device performs the transmission of information signals with increased level of power, and, simultaneously, reduction of emission from electric power transmission lines due to the proper shift of phases of high-frequency signals transmitted by different phase lines.

However, the known device is characterized by an elaborate design and high cost. Besides, the device does not reduce high-frequency emission from the protective grounding line and circuits of capacitive coupling with the grounding of housings of different electric Installations included in the electric network.

Another device intended for the regulation of impedance of electric power transmission lines at high frequencies is known [2]. This device reduces the level of radio frequency range interference in the external electric networks that appear when transceivers utilize the electric power transmission lines. This reduction is attained due to the restriction of high-frequency signal propagation distance (over the electric power transmission lines) effected through the use of active low-frequency filters. The known device comprises the first inductive element made as two high-current inductors (placed in series and included in the phased line) and second inductive element made as inductors (placed in series), between which an amplifier is installed. The first and second elements are inductively coupled with one another in such a way that parasitic high-frequency component in high-current inductors is suppressed.

The known device is characterized by elaborate design and high cost. Besides, the device does not reduce high-frequency emission from the grounding loops.

The device intended for reducing the level of emission In the course of Information transmission by electric power transmission lines represents the closest analog to the invention claimed herein [3]. The known device comprises a ferromagnetic core on which at least two identical and coordinatedly switched windings are installed. One winding is included in the neutral line, while the remaining windings are included in one or three phased electric power transmission lines (depending on the number of phased lines used). When this analog is used, a signal from a transceiver is supplied cophasally to the phased line(s) and neutral electric power transmission line and anti-phasally - to the grounding (or neutral grounding) line. The known device does not change the impedance of electric power transmission lines for supplying the power current for electrically-powered equipment, but it increases the impedance of lines for a high-frequency signal, thus restricting its propagation into external electric power transmission networks.

However, the radiation of high-frequency signal and reception of high-frequency interference by the ground loop (formed by the capacitive coupling of the grounding line and housings of electric equipment grounded to earth) is observed when using the known device. As a result, one has to limit the admissible level of a high-frequency signal formed by a transceiver, data transmission rate and data transmission distance.

The aim of the present invention was to develop a device that effectively reduces the levels of emission and interference that appear in the course of information transmission by electric power transmission lines.

The aim indicated above is attained owing to the fact that the device for suppressing the emission (appearing in the course of information transmission by electric power transmission lines) includes at least three identical windings placed on a common magnetic conductor. These windings are made so that is becomes possible to consecutively and coordinatedly connect the first said winding to the grounding line, the se3cond said winding - to the neutral electric power transmission lines, and each of the remaining windings - to the appropriate phased electric power transmission line.

As the known prototype device, the claimed device (included in electrirpower transmission lines and grounding line) does not change the impedance of electric power transmission lines for supplying the power current for electrically-powered, equipment. However in contrast to the above-described prototype device, it also does not change the impedance of the lines for the propagation of a high-frequency signal from a transceiver, because it symmetrizes (balances) the phased and neutral lines of electric power transmission lines by high frequency and increases (through the introduction of inductivity) the impedance of only ground loops formed by the electric power transmission lines or by the grounding line and capacitive coupling of the grounded housings of electric equipment with the earth, thus reducing the levels of emission and interference that restrict the employment of electric power transmission lines in hybrid information networks.

In terms of its design, the invention claimed herein may be included in various pieces of electric equipment - e.g. in input automatic switches/breakers by means of which the distribution of electric power in a building is arranged.

To avoid changes in the designs of existing electric equipment, the device may be placed in a casing equipped with one plug and at least one socket, between the appropriate contacts of which said windings are installed. In this case the device represents an adapter, via which electricity-consuming devices are connected to power network (mains).

In order to reduce loss for the remagnetization of the magnetic conductor at high frequencies it is preferable to make it of magnetically soft material.

The invention daimed herein is illustrated by graphical materials and drawings:
Fig. 1 shows schematically an electric circuit of the device claimed herein;
Fig. 2 shows a diagram for connecting the device claimed herein to an electric network used by transceivers of a local area network (I.AN) for the purpose of data transmission;
Fig. 3 shows a diagram of electric network with the indication of one of ground loops that is a source of radio-frequency radiation (shown by dotted line);
Fig. 4 shows a diagram of electric network, in which the current in a ground loop is compensated through the use of the device claimed herein;
Fig. 5 shows a dependence of the level of emission (radiation) E from ground loop upon the frequency in the absence of the device-claimed herein (a) and when the device claimed herein is included in the electric network (b);
Fig. 6 shows a side view (in section) of the device claimed herein (made, as an adapter with a plug and socket);

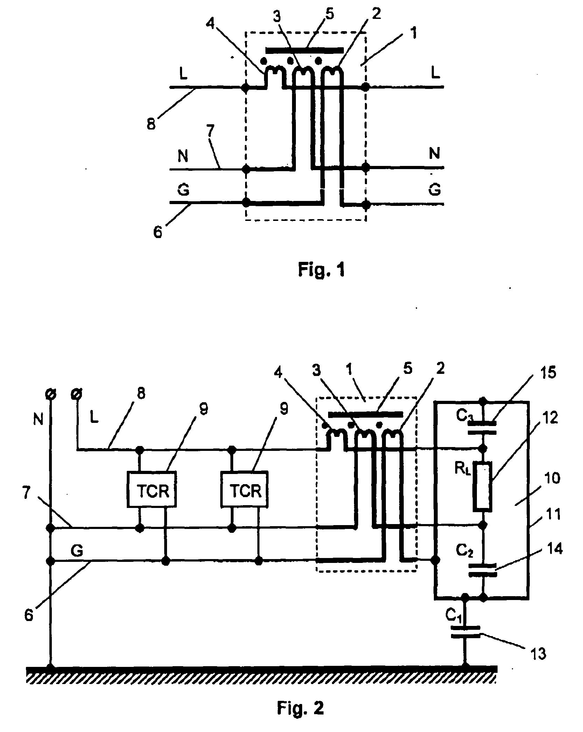

The device claimed herein 1 (see Fig. 1) includes at least three identical and coordinatedly connected windings **2, 3, 4** placed on a common magnetic conductor **5.** Device **1** is connected to the electric power transmission lines (used for the exchange of data signals) in the following manner (see Fig. 2). Winding **2** is connected in series to grounding (G) line **6,** winding **3** is connected in series to neutral (N) electric power transmission line **7,** while one, two or three windings **4** are connected in series to one, two or three phased 8 (L) for electric power transmission. The number of windings **4** depends upon the number of phased lines **8** employed for supplying power for electricity-consuming devices. An example of device **1** for a single-phase electric network is shown in Fig. 1.

Transceivers (TCR) **9** are connected to lines **6, 7,** and **8** (see Fig. 2). Electricity-consuming device **10** (e.g. refrigerator, washing machine, dish-washing machine, and so forth) having a grounded metal housing **11** is connected to the same lines **6, 7,** and **8.** Equivalent load **12** (R_{L}) of such electricity-consuming device: **10** is shown in Rg. 2. Housing **11** (in reference to the earth) has the equivalent capacitance **13** (C₁), and, in reference to the electric power transmission lines **7** and **8 -** respective capacitances **14** (C₂) and **15** (C₃).

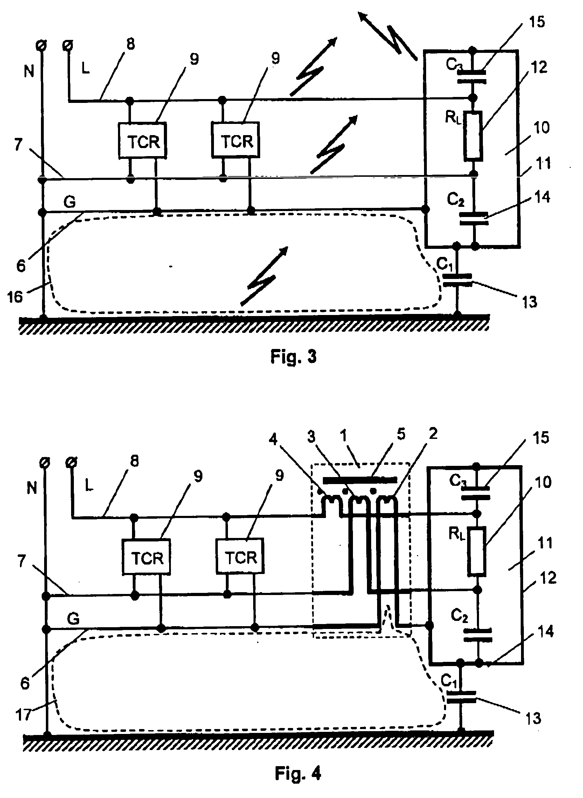

When transceivers 9 (included in electric power transmission lines - see. Fig. 3) operate in the existing networks, the protective grounding line 6 and circuit of capacitive coupling of the earth with the grounded casings **11** of various devices **10** (together with supply lines **7, 8** via capacitances **13** and **15)** form ground loops (e.g. 16) that represent the sources of high-frequency radiation because the area of these ground loops is large.

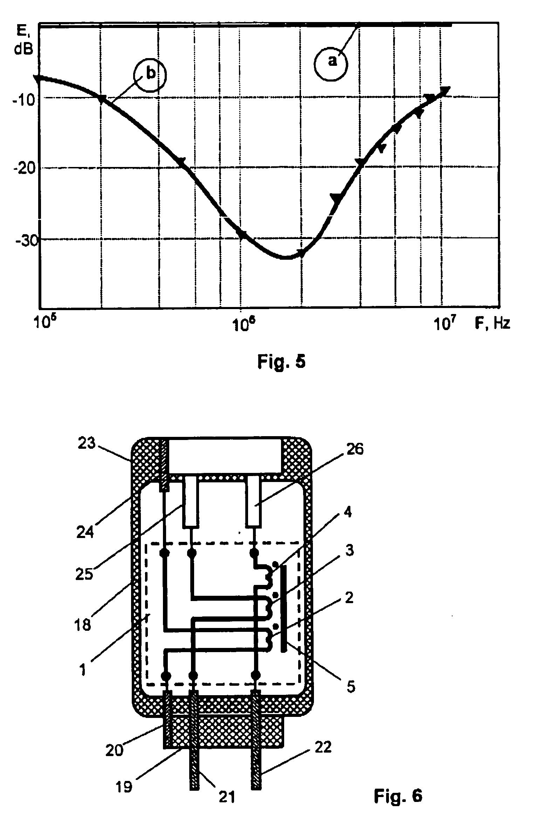

When the device claimed herein **1** is connected to lines **6, 7** and **8** (see Fig. 4), the impedance of lines is not changed in the circuits of power current feeding load **12** and in circuits for the propagation of high-frequency signal from transceivers **9.** This is so because the currents passing through windings **2, 3** and **4** of device **1** produce zero net magnetic flux through magnetic conductor **5.** When transceiver **9** transmits a high-frequency signal over the power supply communication lines, high-frequency electric current is produced in the grounding protective line **6.** However, for this current (passing through the ground loop **17** of capacitive coupling of casing **11** and earth), the impedance of lines goes up because in this case device **1** operates as inductance with magnetic conductor **5,** through which uncompensated magnetic flux (resulting from the passage of current by ground loop **17)** passes. As can be seen from the results of measurements of high-frequency emission produced when transceivers employ an electric power transmission line (see Fig. 5), connection of claimed device 1 to lines **6, 7,** and **8** makes it possible to considerably reduce the level of emission (radiation) from electric power transmission lines.

Device **1** may be built-in into existing electric network devices - e.g. into the input automatic switches/breakers, devices for protective disconnection of networks, connectors, extension cords, adapters and other known devices.

A version of design of device 1 made as an adaptor (intended for connecting an electricity-consuming device through the use of this adaptor - e.g. refrigerator, washing machine, and the like) is shown in Fig. 6. In this design version, device **1** is placed inside housing **18** made of dielectric material. One face **19** of housing **18** is made as a plug with three conducting pins (or conducting blades) **20, 21** and **22.** This plug is intended for the connection with network socket (not shown in Fig. 6), to which electric power transmission lines are connected. The opposite face **23** of housing **18** is made as a socket with three pinholes **24, 25** and **26.** This socket is intended for the connection of electricity-consuming device **10** (not shown in Fig. 6). Windings **2, 3** and **4** are connected respectively: between pin **20** and pinhole **24,** between pin **21** and pinhole **25,** and between pin 22 and pinhole 26. Pins **20, 21** and **22** of the adapter should be plugged into electric network socket, while a plug of an electricity-consuming device (e.g. refrigerator) should be plugged into pinholes **24, 25** and **26.** Device **1** (in this case - adaptor) operates in the manner described above.

Other designs of device (adapter) **1** are also possible. For example, it may be made as an adapter with greater number of pairs of pins and pinholes (to make it suitable for connecting to three-phase networks), as well as with more than one set of pinholes **24, 25** and **26** for the purpose of concurrent connection of several electricity-consuming devices **10.**

### REFERENCES CITED

1. US patent No. 6 037 678, IPC H04M 11/04, published on March 14, 2000.
2. US patent No. 5 844 789, IPC H02J 1/02, published on December 1, 1998.
3. US patent No. 5 257 006, IPC H04M 11/04, published on October 26, 1993.

## Claims

1. A device for the suppression of emission produced in the course of information transmission by electric power transmission lines comprising at least three identical windings placed on a common magnetic conductor and made in such a way that they could be connected coordinatedly in series in the following manner: the first said winding - to the grounding line, the second said winding - to the neutral electric power transmission line, and each of the remaining windings - to the appropriate phases electric power transmission line.

2. The device of claim 1, wherein said device is placed in a casing equipped with one plug and at least one socket, with said windings being installed between the appropriate contacts of said plug and said socket(s).

3. The device of claim 1, wherein said magnetic conductor is made of magnetically soft material.
